# EUROPEAN PATENT APPLICATION

(11) **EP 2 570 957 A1**
(43) Date of publication of application: **20.03.2013**
(21) Application number: 11178510.1
(22) Date of filing: 23.08.2011
(51) Int. Cl.: G06F 21/30

(54) **System, device and method for authentication**

(71) Applicant: Research In Motion Limited, Waterloo, ON N2L 3W8 (CA)
(72) Inventor: Adams, Neil Patrick, Waterloo, Ontario N2L 3W8 (CA); TU, Van Quy, Waterloo, Ontario N2L 3W8 (CA); Little, Herbert A, Waterloo, Ontario N2L 5Z5 (CA)
(74) Representative: Moore, Barry

(57) **Abstract**

A computing device and computing device implemented method for setting a security level of the computing device. The method may comprise the computing device

presenting a challenge to a user of the computing device. The challenge requiring the user to register a password with the computing device. The computing device may receive the password through a user input interface of the computing device in response to the challenge. The computing device may process the received password to calculate a password strength value and evaluate the password strength value to assign the security level. In an aspect, the security level may assign a higher security level when the password strength value is relatively high. In an aspect, the security level may allow for an expanded range of user selectable security options when the password strength value is relatively high.

## Description

This invention relates generally to a device, and computer-implemented method for setting a security level of a computing device.

Computing devices often present a user with security settings that are difficult to understand. For instance, a user may be presented with security level options such as:
a. Content Protection Strength: Strong, Stronger, Strongest;
b. Two-factor Protection: Enabled, Disabled; or,
c. Memory Cleaning: Enabled, Disabled.

A user selecting a security level may select a level without understanding the implications for the details of how the security level protects the computing device.

There is a need for a device and method for avoiding limitations in the prior art.

### BRIEF DESCRIPTION OF THE DRAWINGS

In drawings which illustrate by way of example only a preferred embodiment of the invention,

Figure 1 is a block diagram of an embodiment of a mobile communication device.

Figure 2 shows an exemplary block diagram of a communication subsystem component of an embodiment of a mobile communication device.

Figure 3 is a block diagram illustrating an embodiment of a system for registering and authenticating a user.

### DETAILED DESCRIPTION

A system, devices and method may be provided for secure authentication of a user accessing an on-line resource.

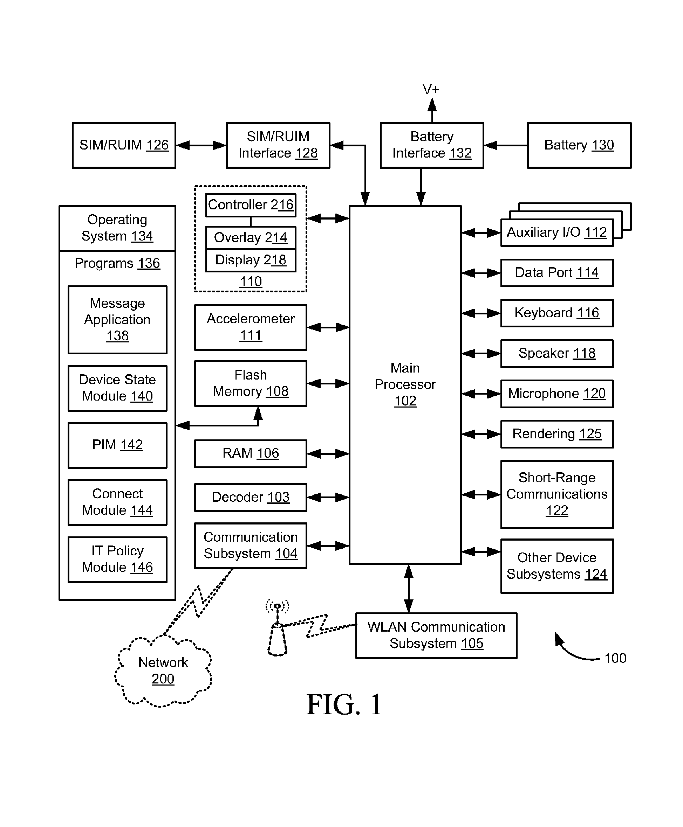

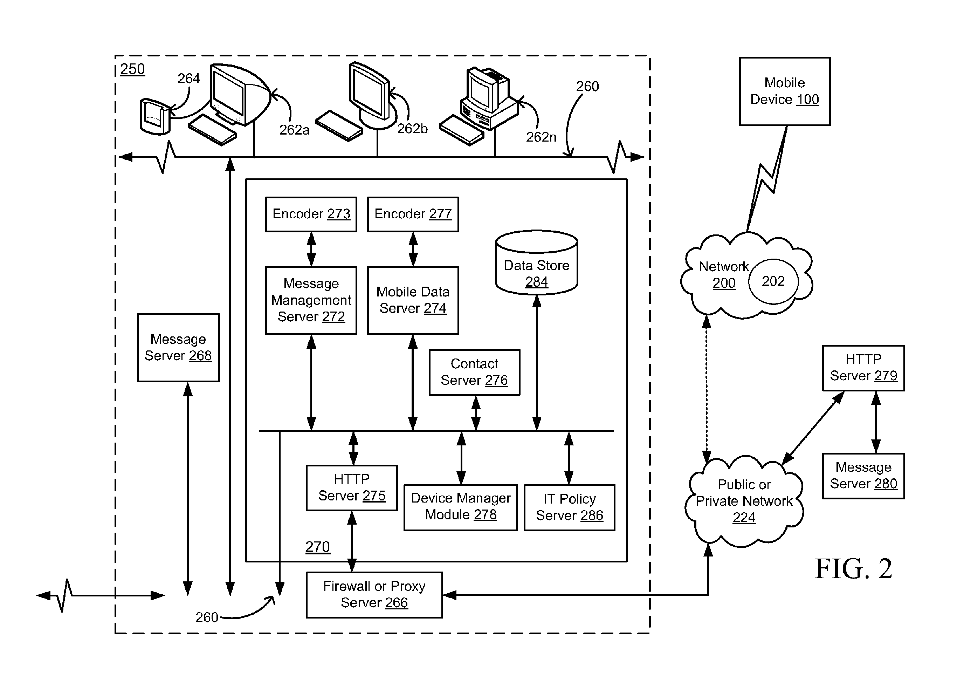

The embodiments described herein may be implemented on a mobile communication device such as that illustrated in FIGS. 1 and 2. The mobile communication device 100 may communicate with other devices over a wireless communication system or enterprise system. The mobile communication device 100 may also communicate with other devices over a short-range communication means such as short-range wireless communications such as Bluetooth™, Infrared, or Wi-Fi, or using a short-range physical link such as a USB cable. The mobile communication device 100 can also have voice communication capabilities, typically delivered through the wireless communication system.

FIG. 1 is a block diagram of an exemplary embodiment of a mobile communication device 100. The mobile communication device 100 includes a number of components such as a main processor 102 that controls the overall operation of the mobile communication device 100. Communication functions, including data and voice communications, are performed through a communication subsystem 104. Data received by the mobile communication device 100 can be decompressed and decrypted by decoder 103, operating according to any suitable decompression techniques, and encryption/decryption techniques according to various standards, such as Data Encryption Standard (DES), Triple DES, or Advanced Encryption Standard (AES)). Image data is typically compressed and decompressed in accordance with appropriate standards, such as JPEG, while video data is typically compressed and decompressed in accordance with appropriate standards, such as H.26x and MPEG-x series standards.

The communication subsystem 104 receives messages from and sends messages to a wireless network 200. In this exemplary embodiment of the mobile communication device 100, the communication subsystem 104 is configured in accordance with one or more of Global System for Mobile Communication (GSM), General Packet Radio Services (GPRS) standards, Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM, GPRS, EDGE, or UMTS, and optionally other network communications. With newer network protocols, these channels are capable of supporting both circuit switched voice communications and packet switched data communications.

Other wireless networks can also be associated with the mobile communication device 100 in variant implementations. The different types of wireless networks that can be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks, third-generation (3G) networks like EDGE and UMTS. Some other examples of data-centric networks include WiFi 802.11™, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range wireless communications 122 and other device subsystems 124.

Some of the subsystems of the mobile communication device 100 perform communication-related functions, whereas other subsystems can provide "resident" or on-device functions. By way of example, the display 110 and the keyboard 116 can be used for both communication-related functions, such as entering a text message for transmission over the network 200, and device-resident functions such as a calculator or task list.

A rendering circuit 125 is included in the device 100. When a user specifies that a data file is to be viewed on the display 110, the rendering circuit 125 analyzes and processes the data file for visualization on the display 110. Rendering circuit 125 may be implemented as hardware, software, or as a combination of both hardware and software.

The mobile communication device 100 can send and receive communication signals over the wireless network 200 after required network registration or activation procedures have been completed. Network access is associated with a subscriber or user of the mobile communication device 100. To identify a subscriber, the mobile communication device 100 requires a SIM/RUIM card 126 (i.e. Subscriber Identity Module or a Removable User Identity Module) to be inserted into a SIM/RUIM interface 128 in order to communicate with a network. The SIM/RUIM card 126 is one type of a conventional "smart card" that can be used to identify a subscriber of the mobile communication device 100 and to personalize the mobile communication device 100, among other things. Without the SIM/RUIM card 126, the mobile communication device 100 is not fully operational for communication with the wireless network 200. By inserting the SIM/RUIM card 126 into the SIM/RUIM interface 128, a subscriber can access all subscribed services. Services can include: web browsing and messaging such as e-mail, voice mail, Short Message Service (SMS), and Multimedia Messaging Services (MMS). More advanced services can include: point of sale, field service and sales force automation. The SIM/RUIM card 126 includes a processor and memory for storing information. Once the SIM/RUIM card 126 is inserted into the SIM/RUIM interface 128, it is coupled to the main processor 102. In order to identify the subscriber, the SIM/RUIM card 126 can include some user parameters such as an International Mobile Subscriber Identity (IMSI). An advantage of using the SIM/RUIM card 126 is that a subscriber is not necessarily bound by any single physical mobile device. The SIM/RUIM card 126 can store additional subscriber information for a mobile device as well, including datebook (or calendar) information and recent call information. Alternatively, user identification information can also be programmed into the flash memory 108.

The mobile communication device 100 may be a battery-powered device including a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile communication device 100. Although current technology makes use of a battery, future technologies such as micro fuel cells can provide the power to the mobile communication device 100.

The mobile communication device 100 also includes an operating system 134 and software components 136 to 146 which are described in more detail below. The operating system 134 and the software components 136 to 146 that are executed by the main processor 102 are typically stored in a persistent store such as the flash memory 108, which can alternatively be a read-only memory (ROM) or similar storage element (not shown). Those skilled in the art will appreciate that portions of the operating system 134 and the software components 136 to 146, such as specific device applications, or parts thereof, can be temporarily loaded into a volatile store such as the RAM 106. Other software components can also be included, as is well known to those skilled in the art.

The subset of software applications 136 that control basic device operations, including data and voice communication applications, will normally be installed on the mobile communication device 100 during its manufacture. Other software applications include a message application 138 that can be any suitable software program that allows a user of the mobile communication device 100 to send and receive electronic messages. Various alternatives exist for the message application 138 as is well known to those skilled in the art. Messages that have been sent or received by the user are typically stored in the flash memory 108 of the mobile communication device 100 or some other suitable storage element in the mobile communication device 100. In at least some embodiments, some of the sent and received messages can be stored remotely from the device 100 such as in a data store of an associated host system that the mobile communication device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile communication device 100 is turned off or loses power.

The PIM 142 includes functionality for organizing and managing data items of interest to the user, such as, but not limited to, e-mail, contacts, calendar events, voice mails, appointments, and task items. A PIM application has the ability to send and receive data items via the wireless network 200. PIM data items can be seamlessly integrated, synchronized, and updated via the wireless network 200 with the mobile device subscriber's corresponding data items stored and/or associated with a host computer system. This functionality creates a mirrored host computer on the mobile communication device 100 with respect to such items. This can be particularly advantageous when the host computer system is the mobile device subscriber's office computer system.

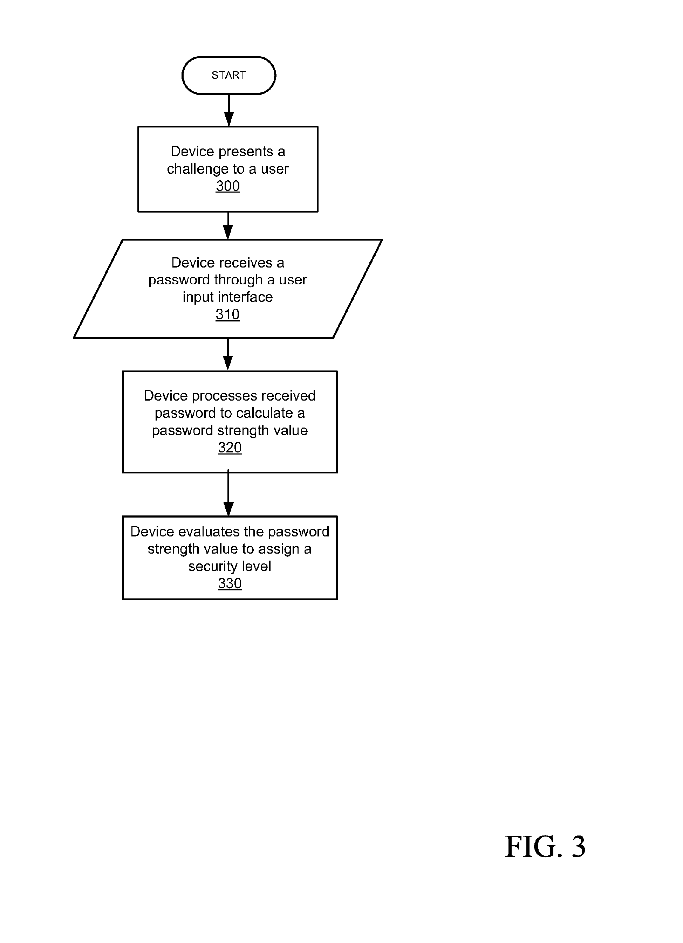

The mobile communication device 100 also includes a connect module 144, and an information technology (IT) policy module 146. The connect module 144 implements the communication protocols that are required for the mobile communication device 100 to communicate with the wireless infrastructure and any host system, such as an enterprise system, that the mobile communication device 100 is authorized to interface with. Examples of a wireless infrastructure and an enterprise system are given in FIGS. 3 and 4, which are described in more detail below.

The connect module 144 includes a set of Application Programming Interfaces (APIs) that can be integrated with the mobile communication device 100 to allow the mobile communication device 100 to use any number of services associated with the enterprise system. The connect module 144 allows the mobile communication device 100 to establish an end-to-end secure, authenticated communication pipe with the host system. A subset of applications for which access is provided by the connect module 144 can be used to pass IT policy commands from the host system to the mobile communication device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the mobile communication device 100. These software applications can be third party applications, which are added after the manufacture of the mobile communication device 100. Examples of third party applications include games, calculators, utilities, etc.

The additional applications can be loaded onto the mobile communication device 100 through at least one of the wireless network 200, the auxiliary I/O subsystem 112, the data port 114, the short-range wireless communications subsystem 122, or any other suitable device subsystem 124. This flexibility in application installation increases the functionality of the mobile communication device 100 and can provide enhanced on-device functions, communication-related functions, or both. For example, secure communication applications can enable electronic commerce functions and other such financial transactions to be performed using the mobile communication device 100.

The data port 114 enables a subscriber to set preferences through an external device or software application and extends the capabilities of the mobile communication device 100 by providing for information or software downloads to the mobile communication device 100 other than through a wireless communication network. The alternate download path can, for example, be used to load an encryption key onto the mobile communication device 100 through a direct and thus reliable and trusted connection to provide secure device communication. The data port 114 can be any suitable port that enables data communication between the mobile communication device 100 and another computing device. The data port 114 can be a serial or a parallel port. In some instances, the data port 114 can be a USB port that includes data lines for data transfer and a supply line that can provide a charging current to charge the battery 130 of the mobile communication device 100.

The short-range wireless communications subsystem 122 provides for communication between the mobile communication device 100 and different systems or devices, without the use of the wireless network 200. For example, the subsystem 122 can include an infrared device and associated circuits and components for short-range communication. Examples of short-range communication standards include standards developed by the Infrared Data Association (IrDA), Bluetooth™, and the 802.11™ family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber can also compose data items, such as e-mail messages, for example, using the keyboard 116 in conjunction with the display 110 and possibly the auxiliary I/O subsystem 112. The auxiliary subsystem 112 can include devices such as: a touchscreen, mouse, track ball, infrared fingerprint detector, or a roller wheel with dynamic button pressing capability. The keyboard 116 is preferably an alphanumeric keyboard and/or telephone-type keypad. However, other types of keyboards can also be used. A composed item can be transmitted over the wireless network 200 through the communication subsystem 104. It will be appreciated that if the display 110 comprises a touchscreen, then the auxiliary subsystem 112 may still comprise one or more of the devices identified above.

For voice communications, the overall operation of the mobile communication device 100 is substantially similar, except that the received signals are output to the speaker 118, and signals for transmission are generated by the microphone 120. Alternative voice or audio I/O subsystems, such as a voice message recording subsystem, can also be implemented on the mobile communication device 100. Although voice or audio signal output is accomplished primarily through the speaker 118, the display 110 can also be used to provide additional information such as the identity of a calling party, duration of a voice call, or other voice call related information.

In an aspect, a computing device program product may be provided for execution on the computing device 100, the computing device program product rendering the computing device 100 operative to carry out steps of the method. In an embodiment, the computing device program product may comprise computer readable program code means embodied on a storage medium such as an optical disc, hard disc or other non-transitory memory.

FIG. 2 shows an exemplary block diagram of the communication subsystem component 104. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile communication device 100 is intended to operate. Thus, it should be understood that the design illustrated in FIG. 2 serves only as one example.

Signals received by the antenna 154 through the wireless network 200 are input to the receiver 150, which can perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 can be adaptively controlled through automatic gain control algorithms implemented in the DSP 160.

The wireless link between the mobile communication device 100 and the wireless network 200 can contain one or more different channels, typically different RF channels, and associated protocols used between the mobile communication device 100 and the wireless network 200. An RF channel is a limited resource that should be conserved, typically due to limits in overall bandwidth and limited battery power of the mobile communication device 100. When the mobile communication device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Traditional approaches to device security present a user with a selection of security settings identified by abstract names, such as: low, medium, high; weak, medium, strong; or, strong, stronger or strongest. Alternate methods allow a user to engage or disable one or more specific security features. While this approach allows for greater granularity, users are typically not aware of the functional effect of engaging or disabling particular features.

Users generally understand that stronger passwords are 'more secure', whereas relatively weak passwords are 'less secure'. In an embodiment a computing device, such as the mobile communication device 100, is provided that is operative to set a security level of the computing device based upon a strength of a password selected by a user of the computing device. The security level may determine an operations level of the computing device or a user access level to security settings of the computing device. Accordingly, the user may indicate a desired security level by their selection of a strong or a weak password.

Referring to FIG. 3, in an aspect the computing device is operative to present a challenge to a user of the computing device in step 300 through a user interface of the computing device. The challenge requiring the user to enter a password through a user input interface of the computing device. The challenge may be presented as an initialisation of the computing device, at a time of setting up one or more components of the computing device, or to register a user seeking access to the computing device. The challenge may be presented, for instance, as a visual cue with a content entry field soliciting user input from the user.

The computing device may then receive a password through a user input interface of the computing device in step 310. The user input interface may comprise the same user interface through which the challenge was presented, or may comprise a separate user input interface. For instance, a challenge may be presented through a screen of the computing device while the password is accepted through a keyboard of the computing device. Alternatively, for instance, the challenge may be presented and the password may be accepted through the same touchscreen interface of the computing device.

The computing device may process the received password to calculate a password strength value in step 320. The computing device may calculate the password strength value by determining a complexity of the password. The password strength value provides a measure of a perceived security of the password entered by the user. For instance, a password entered through a keyboard may contain a number of symbols. A password strength value may reflect the number of possible symbol combinations given a length of the password and the range of symbols employed.

For instance, a 6 character password employing only lower case alphabetical letters may be considered to have 26⁶ combinations. Making the password case sensitive, increases the number of possible combinations to 52⁶. The password with more possible combinations may be considered to be more difficult to guess and accordingly should have a higher password strength value.

In an embodiment, a password may comprise a gesture password such as may be entered through a touchscreen or touchpad of the computing device. A complexity of the gesture based upon length and change in direction of the gesture may provide a measure of the complexity of the gesture password. A more complex gesture should similarly be harder to guess and accordingly should have a higher password strength value.

The computing device may evaluate the password strength value to assign a security level. The security level determining a level of operability of the computing device. For instance, the computing device may apply the password strength value to one or more pre-determined thresholds to assign the security level. By way of example, where a low security level and a high security level are available, the computing device may assign the low security level when the password strength value is below a threshold value and assign the high security level when the password strength is above the threshold value.

In an aspect, the evaluating may comprise assigning a higher security level when the password strength value is relatively high, such that the operations level comprises an expanded operations level. In an aspect, the evaluating may comprise assigning a lower security level when the password strength value is relatively low, such that the operations level comprises a restricted operations level.

The expanded operations level may allow greater access to features of the computing device. The restricted operations level may render certain resources, components or functions of the computing device unavailable. For instance, components of the device may be made available to the user in the expanded operations level. By way of example, confidential information may be stored in a secure data store of the computing device. Access to the confidential information may be contingent upon the computing device being in the expanded operations level.

Accordingly, when a user enters a weak password, they may indicate to the computing device that they intend to conduct low security operations, such as browsing the internet, conducting personal operations such as email or social networking. The computing device detects the weak password as having a relatively low password strength and enters a low security level in which features that provide access to sensitive information may be rendered inoperable.

In an aspect, the security level may determine a user access level to security settings of the computing device. In the aspect, the evaluating may comprise assigning a higher security level when the password strength value is relatively high, such that the user access level provides an expanded range of security settings available to the user. Similarly, the evaluating may comprise assigning a lower security level when the password strength value is relatively low, such that the user access level provides a restricted range of security settings available to the user.

As explained above, input of a weak password indicates that the user intends to conduct less sensitive operations on the computing device. The computing device may be operative to limit both a range of features available according to the security level, as well as limiting the ability to adjust security settings which may determine, for instance the range of features that are available in each security level. Accordingly, the higher security level, as determined by a higher password strength value, may be required to both access an expanded range of operability as well as to set the scope of how the expanded range of operability differs from the restricted range of operability.

In an aspect, at least one component of the computing device may be operative to receive the operations level. In the aspect, the at least one component may periodically receive an updated operations level depending upon the password strength value currently in effect on the computing device. The at least one component may adjust a component operations level in accordance with the updated operations level.

For instance, the at least one component may comprise a calendar application operative on the computing device. The calendar application may allow varying levels of read and write access depending upon the operations level.

In an aspect, the computing device may allow one or more components to present a component challenge to register a user of the computing device with the component by entering a password for that component. In response to the component challenge a user may enter no password, a simple weak password, or a complex password. In some aspects, a user may opt to enter multiple component passwords to allow for different levels of functionality for that component. Accordingly, the password strength value of the component password entered by the user in response to the component challenge, if any, may indicate a user's preference for that component.

In the case where a user opts to enter multiple component passwords for that component, the user may subsequently select a level of operation for the component by entering an appropriate component password.

Various embodiments of the present invention having been thus described in detail by way of example, it will be apparent to those skilled in the art that variations and modifications may be made without departing from the invention. The invention includes all such variations and modifications as fall within the scope of the appended claims.

## Claims

1. A computing device implemented method to set a security level of the computing device, the method comprising the computing device:
presenting a challenge to a user of the computing device, the challenge requiring the user to register a password with the computing device;
receiving the password through a user input interface of the computing device;
processing the received password to calculate a password strength value; and,
evaluating the password strength value to assign the security level.

2. The method of claim 1 wherein the security level determines an operations level of the computing device.

3. The method of claim 2 wherein the evaluating comprises assigning a higher security level when the password strength value is relatively high, such that the operations level comprises an expanded operations level.

4. The method of claim 2 or claim 3 wherein the evaluating comprises assigning a lower security level when the password strength value is relatively low, such that the operations level comprises a restriced operations level.

5. The method of any preceding claim wherein the security level determines a user access level to security settings of the computing device.

6. The method of claim 5 wherein the evaluating comprises assigning a higher security level when the password strength value is relatively high, such that the user access level provides an expanded range of security settings available to the user.

7. The method of claim 5 or claim 6 wherein the evaluating comprises assigning a lower security level when the password strength value is relatively low, such that the user access level provides a restricted range of security settings available to the user.

8. The method of any one of claims 2 to 4 wherein at least one component of the computing device is operative to receive the security level and the method further comprises the at least one component:
periodically receiving an updated security level; and,
adjusting a component operations level in accordance with the updated security level.

9. A computing device operative to execute the method of claim 1.

10. The computing device of claim 9 wherein the computing device comprises a wireless communications device.

## Amended claims

### Amended claims in accordance with Rule 137(2) EPC.

**1.** A computing device (100) implemented method to set a security level of the computing device (100), the method comprising the computing device (100):
presenting a challenge (300) to a user of the computing device (100), the challenge requiring the user to register a password with the computing device (100);
receiving the password (310) through a user input interface of the computing device (100);
processing the received password (320) to calculate a password strength value; and,
evaluating the password strength value to assign the security level;
entering an operations level corresponding to the security level;
at least one component of the computing device (100) receiving the operations level; and,
said at least one component adjusting a component operations level corresponding to a level of functionality for that component in accordance with the operations level.

**2.** The method of claim 1 further comprising the at least one component periodically:
receiving an updated operations level, said updated operations level corresponding to the password strength value of a current password; and,
adjusting said component operations level in accordance with the updated operations level.

**3.** The method of claim 1 or claim 2 wherein the evaluating comprises assigning a higher security level when the password strength value is above a threshold value, such that the operations level comprises an expanded operations level.

**4.** The method of any one of claims 1 to 3 wherein the evaluating comprises assigning a lower security level when the password strength value is below a threshold value, such that the operations level comprises a restriced operations level.

**5.** The method of any preceding claim wherein the security level determines a user access level to security settings of the computing device (100).

**6.** The method of claim 5 wherein the evaluating comprises assigning a higher security level when the password strength value is above a threshold level, such that the user access level provides an expanded range of security settings available to the user.

**7.** The method of claim 5 or claim 6 wherein the evaluating comprises assigning a lower security level when the password strength value is below a threshold level, such that the user access level provides a restricted range of security settings available to the user.

**8.** The method of claim 1 further comprising the component:
presenting a component challenge to the user;
receiving a component password from the user; and,
setting a level of operation for the component corresponding to a strength value of the component password.

**9.** The method of claim 8 wherein the component previously registered the user by:
presenting a component challenge to register the user; and,
receiving multiple component passwords from the user.

**10.** The method of claim 1 wherein the user interface comprises a keyboard or a touchscreen of the computing device (100).

**11.** A computing device (100) operative to execute the method of any one of claims 1 to 10.

**12.** The computing device (100) of claim 11 wherein the computing device (100) comprises a wireless communications device.

**13.** A computing device program product for execution by a computing device (100) to execute the method of any one of claims 1 to 10.
